# EUROPEAN PATENT SPECIFICATION

(11) **EP 1 803 665 B1**
(45) Date of publication and mention of the grant of the patent: **13.05.2009**
(21) Application number: 05425955.1
(22) Date of filing: 30.12.2005
(51) Int. Cl.: B65G 47/91, B65G 47/90, B65B 5/12, B65B 35/36, B65B 35/38

(54) **Pick up head for a product transfer device and method for transferring products**
Greiferkopf für eine Warenüberführungseinrichtung und ein Verfahren zum Überführen von Waren
Tête de préhension pour un appareil de transfert de produits et une méthode pour transférer des produits

(43) Date of publication of application: 04.07.2007
(73) Proprietor: Cavanna S.p.A., 28077 Prato Sesia (NO) (IT)
(72) Inventor: Guidetti, Dario, 28077 Prato Sesia (Novara) (IT)
(74) Representative: Marchitelli, Mauro

(56) References cited:
- EP-A- 0 163 092
- EP-A- 1 103 466
- EP-A- 1 544 110
- DE-A1- 19 831 033
- US-A- 5 605 031

## Description

The present invention relates to the packaging sector, for example to the packaging of foodstuffs.

More precisely, the invention relates to packaging plants in which a device is provided for transferring products, said device having a pick-up head equipped with a plurality of product-pick-up members, in which each pick-up member is configured for picking up one or more products.

Modern packaging plants are able to reach outputs in the region of more than 600 packs per minute, and plants are required that are able to carry out the filling of packages with a widely variable number of products for each package and with a high variability as regards the arrangement of the products in the package.

An example of application of the present invention may for instance be the packaging of confectionery products arranged in packets, boxes or trays in an orderly way in one or more layers set on top of one another, in which in each layer the products are arranged in a specific configuration.

The known art envisages that the individual products to be packaged advance, arranged in an orderly way, on a conveyor from which they are picked up by means of a robot with a pick-up head that picks up a certain number of pieces and deposits them in the preset configuration in the packets or boxes.

In order to reduce the number of manoeuvres of the robot for transfer of the products, it is necessary for the pick-up head to be able to carry out picking-up of a certain number of products simultaneously. On the other hand, the number of products that are picked up simultaneously and their arrangement when they are picked up constitutes a constraint on account of the change of format of the packages.

In packaging plants that use a transfer device with a product-pick-up head it is frequently necessary to carry out the replacement of the pick-up head in order to change the number and arrangement of the products in the individual packages.

DE-A-19831033 discloses a handling head according to the preamble of claim 1, having a plurality of handling devices for reception, pivoting, displacement and/or rotation of components, with a measuring device detecting the actual component position. Each handling head is driven by a respective stationary motor, through a flexible transmission. The driving device shown in DE-A-19831033 is complex, especially in view of the need to provide a flexible transmission for each handling device.

The object of the present invention is to provide a pick-up head and a method for transferring products that will overcome said drawbacks.

According to the present invention, said purpose is achieved by a pick-up head and by a method for transferring products which have the characteristics forming the subject of Claims 1 and 9, respectively.

The present invention will now be described in detail with reference to the attached plate of drawings, which are provided purely by way of nonlimiting example and in which:
- Figure 1 is a perspective view of a pick-up head according to the present invention;
- Figure 2 is an elevation according to the arrow II of Figure 1;

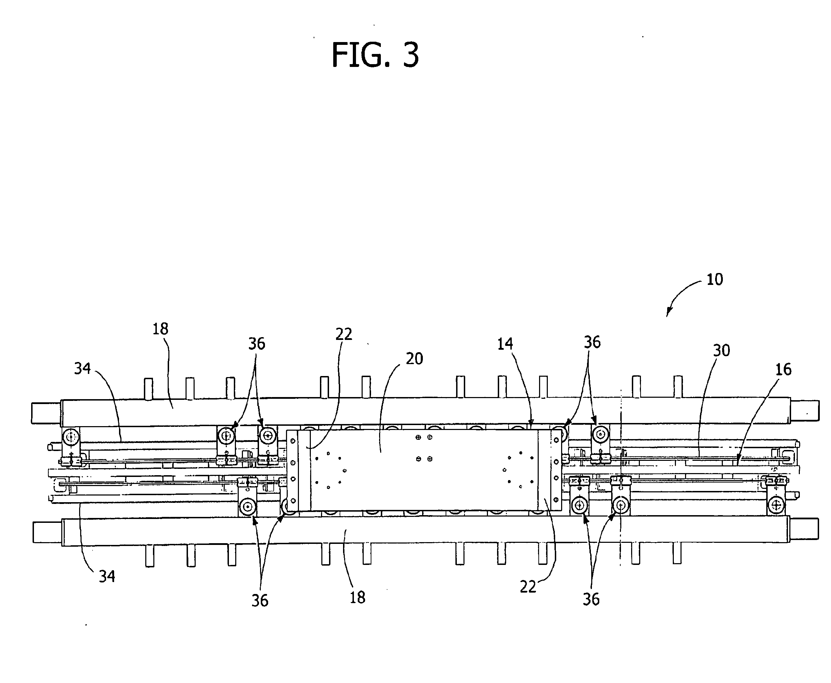

- Figure 3 is a plan view according to the arrow III of Figure 1;

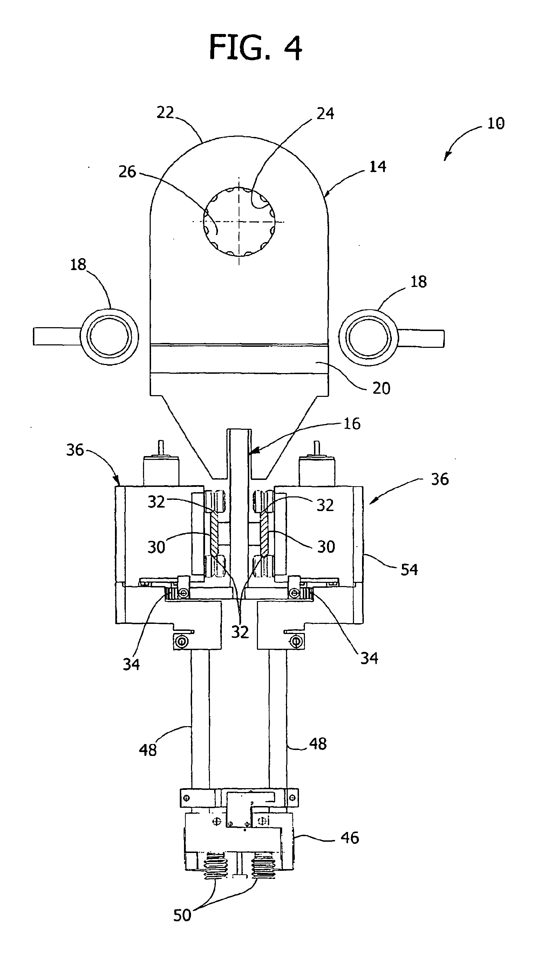

- Figure 4 is a side view according to the arrow IV of Figure 1; and
- Figure 5 is a cross section according to the line V-V of Figure 1.

With reference to the figures, number 10 designates a pick-up head forming part of a device for transferring products for an automatic packaging line. The pick-up head 10 comprises a basic structure 12 including an attachment flange 14, a supporting and guiding beam 16 and two suction manifolds 18. These components of the basic structure 12 are fixed with respect to one another in a permanent way.

The attachment flange 14 is configured so as to be fixed to a complementary attachment member (not illustrated) situated at the end of a mobile arm of a device for transferring products. In the example illustrated, the attachment flange 14 comprises a plate 20 from which there project two lugs 22 equipped with respective holes 24 aligned with respect to one another. In the holes 24 bearings 26 can be mounted for connection of the head 10 to the device for transferring products in a rotatable way about an axis 28.

The supporting and guiding beam 16 is a rectilinear beam having a cross section with a flattened rectilinear shape. The beam 16 extends in a direction orthogonal to the plate 20 of the attachment flange 14. The supporting and guiding beam 16 carries at least one longitudinal guide 30 that extends in a direction parallel to the axis of articulation 28. In the example illustrated in the figures, the supporting and guiding beam 16 carries two longitudinal guides 30 located on opposite sides of the beam 16.

Each of the two longitudinal guides 30 is formed by a metal bar having a rectilinear shape with a flattened cross section set parallel to and at a distance from a principal face of the supporting and guiding beam 16. Each of the two longitudinal guides 30 is preferably equipped with longitudinal guide edges 32 which have a triangular cross section with the vertices facing towards the outside of the cross section, so that in cross section the longitudinal edges of the guide terminate substantially with pointed tips.

The supporting and guiding beam 16 carries moreover two racks 34 that extend parallel to the guides 30. The racks 34 extend in a rectilinear direction throughout the length of the guides 30 and are fixed to the supporting and guiding beam 16.

The head 10 according to the present invention comprises a plurality of pick-up devices 36 divided into two arrays situated on opposite sides of the supporting and guiding beam 16. The pick-up devices 36 of each array engage only one of the two guides 30. The pick-up devices 36 of the two arrays are identical to one another. The devices of each array are mounted on the supporting and guiding beam 16 in a specular position with respect to the pick-up devices 36 of the other array.

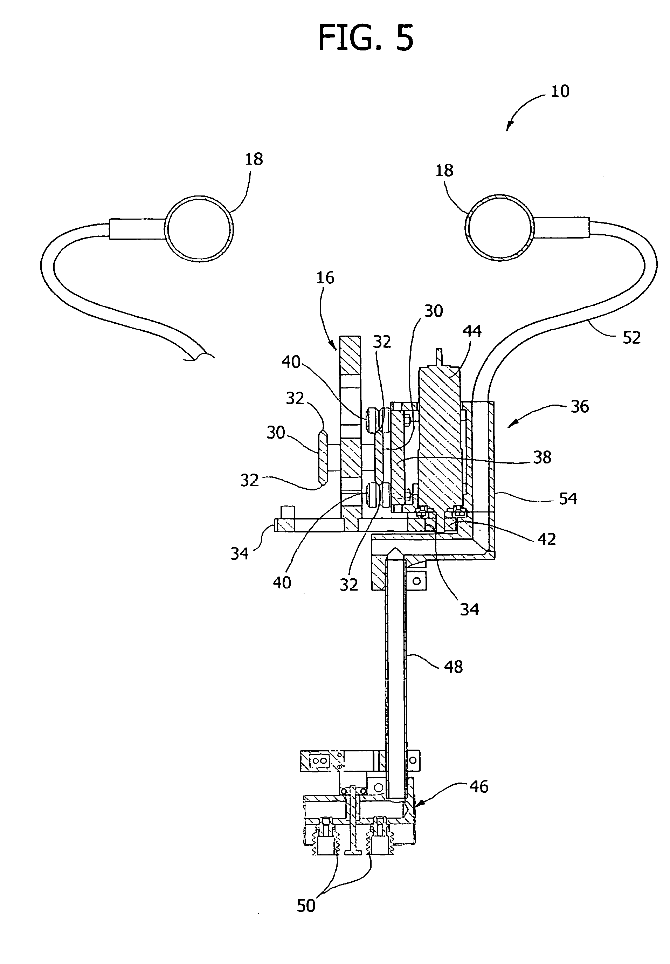

With reference in particular to Figure 5, each pick-up device 36 comprises a body that carries two pairs of wheels 40 with horizontal axes that engage the two opposite longitudinal edges 32 of a respective guide 30.

Each pick-up device 36 is equipped with a numerically controlled independent power drive. In the example illustrated in the figures, each pick-up device 36 is equipped with a toothed wheel 42 with vertical axis that meshes with the respective rack 34. The toothed wheel 42 is actuated by a numerically controlled electric motor 44 and carried by the body 38 of the pick-up device 36.

In a variant (not illustrated), the pick-up devices 36 are actuated by means of numerically controlled linear motors. In this case, the body 38 of each pick-up device 36 is equipped with the moving element of a linear motor, which co-operates with the fixed element of the linear motor carried by the supporting and guiding beam 16. The fixed element of the linear motor is in common for all the pick-up devices 36 of the same set. In this case the racks 34 and the toothed wheels 42 are no longer necessary.

Each pick-up device 36 is equipped with a respective pick-up member 46 configured for picking up one or more products. In the example illustrated, the pick-up member 46 of each pick-up device 36 is connected to the body 38 via an elongated element 48, which extends in a direction orthogonal to the direction of movement of the pick-up device 36 along the guide 30.

The pick-up members 46 are equipped with means for picking up products that can be of the suction-pad type or else of a mechanical type that use pick-up grippers or the like. In the example illustrated in the figures, the pick-up members 46 are equipped with suction pads 50 connected to the suction manifolds 18.

The suction manifolds 18 are in turn connected to a negative-pressure source (not illustrated). Each pick-up device 36 is equipped with a flexible tube 52 having a first end connected to a respective suction manifold 18 and a second end connected to an L-shaped tubular element 54 fixed to the body 38. The elongated element 48 that connects each pick-up member 46 to the respective body 38 has a tubular shape and establishes the pneumatic connection between the L-shaped tubular element 54 and the suction pads 50. Picking-up and release of the product is controlled by activating or deactivating the connection of the suction manifolds 18 to the negative-pressure source, for example by means of solenoid valves controlled by the control unit of the device for transferring the products.

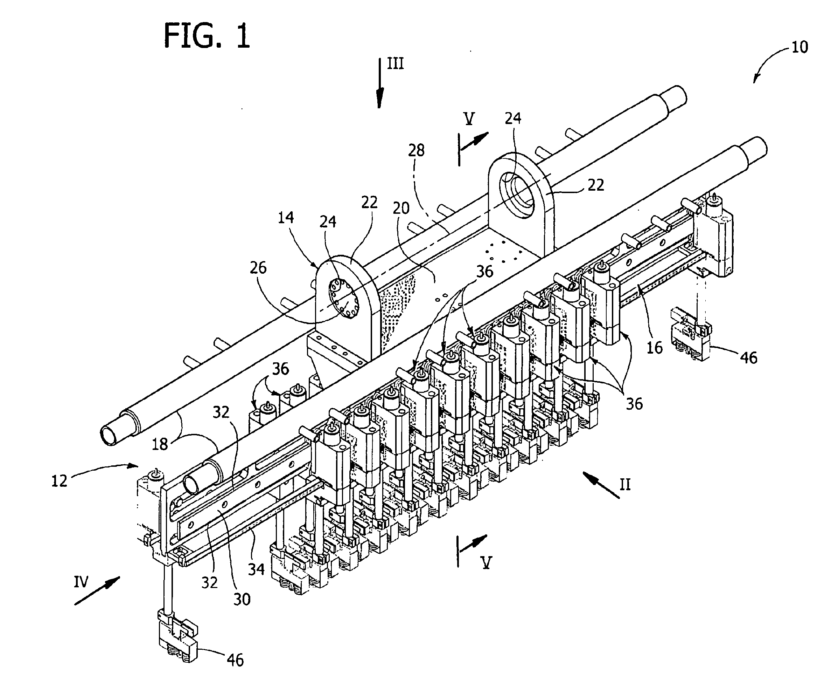

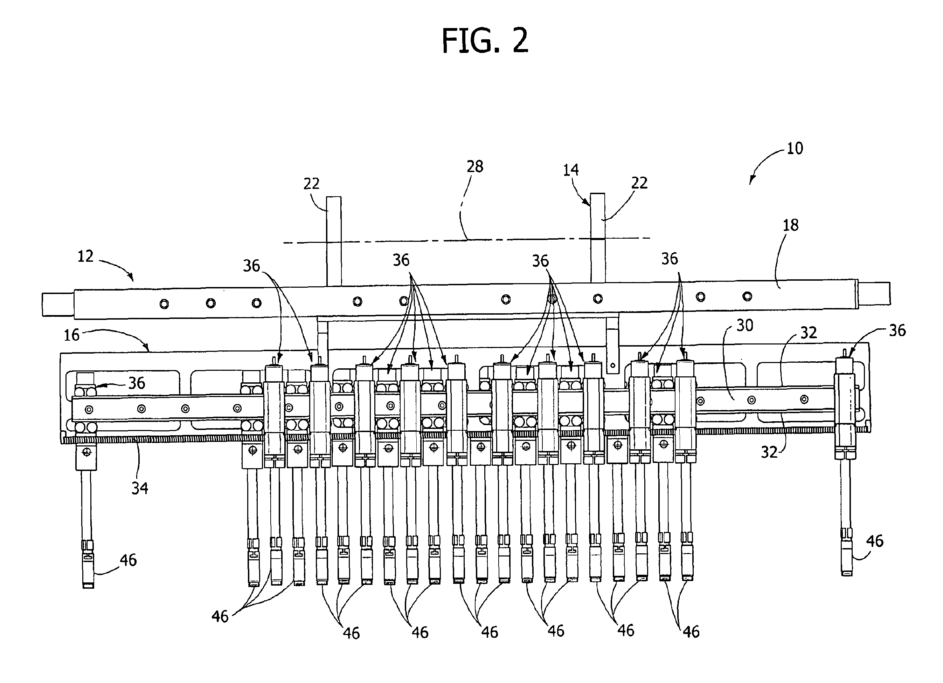

As illustrated in Figures 1 and 2, the pick-up devices of the two arrays are preferably mounted in alternating positions, i.e., with a pick-up device of a first array set in a longitudinal direction between two adjacent pick-up devices of the other array. This arrangement enables reduction of the minimum distance between centres of the pick-up devices 36.

As indicated previously, the motors of the individual pick-up devices 36, of a rotary or linear type, are numerically controlled by a control unit (not illustrated), preferably constituted by the same control unit that manages movement of the device for transferring the products. The control unit is able to position the pick-up devices 36 along the guides 30 on the basis of a program and is moreover able to vary rapidly the position of the pick-up devices 36 along the guides 30.

The numerically controlled independent power drive of the pick-up devices 36 also enables displacement of the pick-up devices 36 along the guides 30 during the travel of the pick-up head 10 from the pick-up position to the release position. This possibility enables the products to be grouped together in a different way in the area of release with respect to the way in which the products are arranged in the pick-up area.

The pick-up devices 36 can also be moved jointly for carrying out tracking for picking up products that are mobile along a direction parallel to the direction of movement of the pick-up devices 36 along the guides 30. Said tracking can also be carried out during the step of release, for example, for depositing the products on moving containment elements.

Adjustment of the position of the pick-up devices 36, movement of the pick-up devices 36 between the condition for picking up the products and the condition for releasing them, and movement of the pick-up devices 36 for tracking the products in the steps for picking up or releasing the products are managed by the control unit on the basis of a control program. By varying the program it is possible to adapt the pick-up head 10 to different configurations for picking up and/or releasing the products and to different operating conditions of the device for transfer of the products.

The same pick-up head 10 may be used for a very extensive range of configurations for packaging products, and it is no longer necessary to carry out replacements of the head when the product-packaging format changes.

## Claims

1. A pick-up head for a device for transferring products, in particular for an automatic packaging line, comprising:
- a basic structure (12) equipped with an attachment flange (14) for its connection to a mobile part of the transfer device; and
- a plurality of devices for picking up products (36) each of which is configured for picking up one or more products, each of said pick-up devices (36) being equipped with an independent power drive that is numerically controlled and can be displaced along the basic structure (12) either independently or jointly with respect to the other pick-up devices (36),
the basic structure (12) comprising a supporting and guiding beam (16) equipped with at least one longitudinal guide (30) on which a plurality of said pick-up devices (36) can move,
**characterized in that** each pick-up device (36) is equipped either with a respective rotary motor (44) actuating a toothed wheel (42) co-operating with a stationary rack (34) carried by the basic structure (12) or with a moving element of a linear motor co-operating with a fixed element of a linear motor carried by said supporting and guiding beam (16).

2. The pick-up head according to Claim 1, **characterized in that** each of said pick-up devices (36) comprises a body (38) equipped with wheels (40) that slidingly engage said guide (30), the body (38) carrying a respective pick-up member (36).

3. The pick-up head according to Claim 2, **characterized in that** each of said pick-up members (46) is equipped with suction pads for picking up products (50).

4. The pick-up head according to Claim 2, **characterized in that** each of said pick-up members (46) is equipped with product-pick-up members of a mechanical type.

5. The pick-up head according to Claim 4, **characterized in that** each of said pick-up devices (36) is connected to a respective suction manifold (18) by means of a flexible pipe (52).

6. A method for transferring articles between a pick-up position and a release position, with a plurality of pick-up devices (36) that are mobile on a basic structure (12), which can be displaced between said pick-up position and said release position,
said method being **characterized in that** it comprises the operations of:
- forming an array of products in a position corresponding to said pick-up position;
- picking up the products of said array with respective pick-up devices (36) of said plurality; wherein each pick-up device (36) is equipped either with a respective rotary motor (44) actuating a toothed wheel (42) co-operating with a stationary rack (34) carried by the basic structure (12) or with a moving element of a linear motor co-operating with a fixed element of a linear motor carried by said supporting and guiding beam (16);
- moving said pick-up devices with said products picked up on said basic structure during displacement from said pick-up position to said release position; and
- depositing said products in a position corresponding to said release position.

7. The method according to Claim 6, **characterized in that** it comprises the operation of moving with relative motion at least two of said pick-up devices (36) in the displacement from said pick-up position to said release position, thus modifying the distance of separation between the respective products picked up.

8. The method according to Claim 6 or Claim 7, **characterized in that** it comprises the operation of imparting upon said pick-up devices (36), at least in a position corresponding to said pick-up or release position, a collective movement of advance along said basic structure (12).

## Patentansprüche

1. Aufnahmekopf für eine Vorrichtung zum Überführen von Erzeugnissen, insbesondere für eine automatische Verpackungsstraße, der umfasst:
- eine Grundstruktur (12), die mit einem Anbringungsflansch (14) versehen ist, um sie mit einem mobilen Teil der Überführungsvorrichtung zu verbinden; und
- eine Vielzahl von Vorrichtungen zum Aufnehmen von Erzeugnissen (36), von denen jede so ausgeführt ist, dass sie ein oder mehrere Erzeugnisse aufnimmt, wobei jede der Aufnahmevorrichtungen (36) mit einer unabhängigen Antriebsquelle versehen ist, die numerisch gesteuert wird und entweder unabhängig oder zusammen mit den anderen Aufnahmevorrichtungen (36) entlang der Grundstruktur (12) verschoben werden kann,
wobei die Grundstruktur (12) einen Trage- und Führungsausleger (16) umfasst, der mit wenigstens einer Längsführung (30) versehen ist, an der sich eine Vielzahl der Aufnahmevorrichtungen (36) bewegen können.
**dadurch gekennzeichnet, dass** jede Aufnahmevorrichtung (36) entweder mit einem entsprechenden Rotationsmotor (44), der ein Zahnrad (42) betätigt, das mit einer stationären Zahnstange (34) zusammenwirkt, die von der Grundstruktur (12) getragen wird, oder mit einem beweglichen Element eines Linearmotors versehen ist, das mit einem feststehenden Element eines Linearmotors zusammenwirkt, das von dem Trage-und-Führungs-Ausleger (16) getragen wird.

2. Aufnahmekopf nach Anspruch 1, **dadurch gekennzeichnet, dass** jede der Aufnahmevorrichtungen (36) einen Körper (38) umfasst, der mit Rädern (40) versehen ist, die mit der Führung (30) gleitend in Eingriff sind, wobei der Körper (38) ein entsprechendes Aufnahmeelement (36) trägt.

3. Aufnahmekopf nach Anspruch 2, **dadurch gekennzeichnet, dass** jedes der Aufnahmeelemente (36) mit Saugnäpfen zum Aufnehmen von Erzeugnissen (50) versehen ist.

4. Aufnahmekopf nach Anspruch 2, **dadurch gekennzeichnet, dass** jedes der Aufnahmeelemente (46) mit Erzeugnis-Aufnahmeelementen eines mechanischen Typs versehen ist.

5. Aufnahmekopf nach Anspruch 4, **dadurch gekennzeichnet, dass** jede der Aufnahmevorrichtungen (36) mittels eines flexiblen Rohrs (52) mit einem jeweiligen Ansaugverteiler (18) verbunden ist.

6. Verfahren zum Überführen von Artikeln zwischen einer Aufnahmeposition und einer Freigabeposition mit einer Vielzahl von Aufnahmevorrichtungen (36), die sich auf einer Grundstruktur (12) bewegen können und zwischen der Aufnahmeposition und der Freigabeposition verschoben werden können,
wobei das Verfahren **dadurch gekennzeichnet ist, dass** es die folgenden Vorgänge umfasst:
- Ausbilden einer Anordnung von Erzeugnissen an einer Position, die der Aufnahmeposition entspricht;
- Aufnehmen der Erzeugnisse der Anordnung mit jeweiligen Aufnahmevorrichtungen (36) der Vielzahl; wobei jede Aufnahmevorrichtung (36) entweder mit einem entsprechenden Rotationsmotor (44), der ein Zahnrad (42) betätigt, das mit einer stationären Zahnstange (34) zusammenwirkt, die von der Grundstruktur (12) getragen wird, oder mit einem beweglichen Element eines Linearmotors versehen ist, das mit einem feststehenden Element eines Linearmotors zusammenwirkt, das von dem Trage-und-Führungs-Ausleger (16) getragen wird;
- Bewegen der Aufnahmevorrichtungen mit den aufgenommenen Erzeugnissen an der Grundstruktur während der Verschiebung von der Aufnahmeposition an die Freigabeposition; und
- Ablegen der Erzeugnisse an einer Position, die der Freigabeposition entspricht.

7. Verfahren nach Anspruch 6, **dadurch gekennzeichnet, dass** es den Vorgang des Bewegens mit relativer Bewegung wenigstens zweier der Aufnahmevorrichtungen (36) bei der Verschiebung von der Aufnahmeposition an die Freigabeposition umfasst, um so den Trennungsabstand zwischen den jeweiligen aufgenommenen Produkten zu modifizieren.

8. Verfahren nach Anspruch 6 oder Anspruch 7, **dadurch gekennzeichnet, dass** es den Vorgang des Versetzens der Aufnahmevorrichtungen (36) in eine gemeinsame Vorwärtsbewegung entlang der Grundstruktur (12) wenigstens an einer Position umfasst, die der Aufnahme- oder der Freigabeposition entspricht.

## Revendications

1. Tête de préhension pour un dispositif de transfert de produits, en particulier pour une ligne d'emballage automatique, comprenant :
- une structure de base (12) équipée d'une bride de fixation (14) pour sa liaison à une partie mobile du dispositif de transfert ; et
- une pluralité de dispositifs de préhension de produits (36), chacun étant configuré pour prendre un ou plusieurs produits, chacun desdits dispositifs de préhension (36) étant équipé d'une commande mécanique indépendante qui est commandée numériquement et peut être déplacée le long de la structure de base (12) indépendamment ou conjointement par rapport aux autres dispositifs de préhension (36),
la structure de base (12) comprenant une poutre de support et de guidage (16) équipée d'au moins un guide longitudinal (30), sur lequel une pluralité desdits dispositifs de préhension (36) peut être déplacée,
**caractérisée en ce que** chaque dispositif de préhension (36) est équipé d'un moteur rotatif (44) respectif actionnant une roue dentée (42) coopérant avec une crémaillère stationnaire (34) portée par la structure de base (12) ou d'un élément mobile d'un moteur linéaire coopérant avec un élément fixe d'un moteur linéaire porté par ladite poutre de support et de guidage (16).

2. Tête de préhension selon la revendication 1, **caractérisée en ce que** chacun desdits dispositifs de préhension (36) comprend un corps (38) équipé de roues (40) qui viennent en contact par coulissement avec ledit guide (30), le corps (38) portant un élément de préhension (36) respectif.

3. Tête de préhension selon la revendication 2, **caractérisée en ce que** chacun desdits éléments de préhension (46) est équipé de plateaux-ventouses pour la préhension des produits (50).

4. Tête de préhension selon la revendication 2, **caractérisée en ce que** chacun desdits éléments de préhension (46) est équipé d'éléments de préhension de produits de type mécanique.

5. Tête de préhension selon la revendication 4, **caractérisée en ce que** chacun desdits dispositifs de préhension (36) est relié à un collecteur d'aspiration (18) respectif au moyen d'un tuyau flexible (52).

6. Procédé de transfert d'articles entre une position de préhension et une position de libération, avec une pluralité de dispositifs de préhension (36) qui sont mobiles sur une structure de base (12) qui peut être déplacée entre ladite position de préhension et ladite position de libération,
ledit procédé étant **caractérisé en ce qu'**il comprend les opérations suivantes consistant à :
- former un ensemble de produits dans une position correspondant à ladite position de préhension ;
- prendre les produits dudit ensemble avec des dispositifs de préhension (36) respectifs de ladite pluralité ; dans lequel chaque dispositif de préhension (36) est équipé d'un moteur rotatif (44) respectif actionnant une roue dentée (42) coopérant avec une crémaillère stationnaire (34) portée par la structure de base (12) ou d'un élément mobile d'un moteur linéaire coopérant avec un élément fixé d'un moteur linéaire porté par ladite poutre de support et de guidage (16) ;
- déplacer lesdits dispositifs de préhension avec lesdits produits pris sur ladite structure de base pendant le déplacement de ladite position de préhension à ladite position de libération ; et
- déposer lesdits produits dans une position correspondant à ladite position de libération.

7. Procédé selon la revendication 6, **caractérisé en ce qu'**il comprend l'opération consistant à déplacer avec un mouvement relatif au moins deux desdits dispositifs de préhension (36) dans le déplacement de ladite position de préhension à ladite position de libération, modifiant ainsi la distance de séparation entre les produits respectifs pris.

8. Procédé selon la revendication 6 ou la revendication 7, **caractérisé en ce qu'**il comprend l'opération consistant à donner auxdits dispositifs de préhension (36), au moins dans une position correspondant à ladite position de préhension ou de libération, un mouvement collectif vers l'avant le long de ladite structure de base (12).
